# DEMANDE DE BREVET EUROPEEN

(11) **EP 1 577 047 A1**
(43) Date de publication de la demande: **21.09.2005**
(21) Numéro de dépôt: 05300181.4
(22) Date de dépôt: 11.03.2005
(51) Int. Cl.: B23K 11/02, B23K 33/00, F16H 53/02

(54) **Embout d'entrainement d'arbre à came, arbre à cames comportant un tel embout, et procédé d'assemblage de celui-ci**

(30) Priorité: 16.03.2004 FR 0450524
(71) Demandeur: Renault s.a.s., 92100 Boulogne Billancourt (FR)
(72) Inventeur: ALEZIER, Maurice, 86200, ARCAY (FR); LANCEART, Laurent, 76120, LE GRAND QUEVILLY (FR)

(57) **Abrégé**

Embout (2) cylindrique d'entraînement d'arbres à carnes fixé par soudage par résistance à l'extrémité d'un arbre à carnes tubulaire par sa surface de contact avec celui-ci, caractérisé en ce que l'embout (2) comporte un déflecteur dépassant à l'intérieur du tube et sans contact avec ce dernier avant soudage. Lors de l'assemblage, l'intérieur du tube d'arbre à carnes (1) est ainsi protégé contre les projections de mètal en fusion par une partie d'extrémité de l'embout (2).

## Description

La présente invention concerne un embout d'entraînement d'arbre à cames d'un moteur à combustion interne, et plus particulièrement un embout d'entraînement d'arbre à cames pour les arbres à cames tubulaire dans lesquels on fait circuler de l'huile pour lubrifier ses paliers. La présente invention concerne également un arbre à cames de moteur à combustion interne comportant un tel embout d'entraînement, et un procédé de soudage par résistance d'un tel embout d'entraînement sur un tube d'arbre à cames.

Il est connu d'assembler des embouts d'entraînement sur des arbres à cames.

Compte tenu des couples moteur à transmettre, on a recours au soudage par résistance de l'embout d'entraînement sur le tube d'arbre à cames. L'opération de soudage par résistance peut occasionner une pénétration de métal en fusion à l'intérieur du tube d'arbre à cames, ce qui impose de laver l'intérieur du tube d'arbre à cames après soudage. Cependant, des perles de soudure peuvent rester collées sur la paroi interne du tube d'arbre à cames et peuvent se détacher par la suite quand l'arbre à cames tourne, et elles peuvent obstruer des passages d'huile de lubrification des paliers, et endommager à terme le fonctionnement du moteur.

L'invention vise à pallier les inconvénients de l'état de la technique.

Dans ce but elle fournit un embout d'entraînement d'arbre comportant un déflecteur dépassant à l'intérieur du tube et sans contact avec ce dernier avant soudage.

Le déflecteur peut dépasser à l'intérieur du tube d'au moins 1 mm de la surface de contact de l'embout sur le tube d'arbres à cames, et il peut être constitué d'une partie tubulaire située au niveau de l'extrêmité de l'embout en contact avec le tube d'arbre à cames. Le diamètre extérieur de la partie tubulaire est inférieur au diamètre intérieur de la partie du tube d'arbre à cames recevant ladite partie tubulaire.

L'extrémité de l'embout ou l'extrémité du tube d'arbre à cames peut comporter une pointe de contact.

Lors de l'assemblage, l'intérieur du tube d'arbre à cames est ainsi protégé contre les projections de métal en fusion par une partie d'extrémité de l'embout.

La présente invention et ses avantages seront mieux compris à la lecture de la description détaillée d'un mode de réalisation pris à titre d'exemple et nullement limitatif, et illustré par les dessins annexés sur lesquels ;
- les figures 1a et 1b sont des schémas de l'assemblage par sondage par résistance d'un embout d'entraînement connu sur un tube d'arbre à cames.
- la figure 2 est un schéma du dispositif de soudage par résistance d'un embout d'entrainement selon l'invention sur un tube d'arbre à cames.
- les figures 3a à 3e sont des schémas représentant en détail l'extrémité de l'embout d'entraînement et du tube d'arbre à cames avant et après l'opération de soudage selon une variante de l'invention.
- les figures 4a et 4b sont des schémas de l'assemblage par soudage par résistance d'un embout d'entrainement sur un tube d'arbre à cames selon une variante.

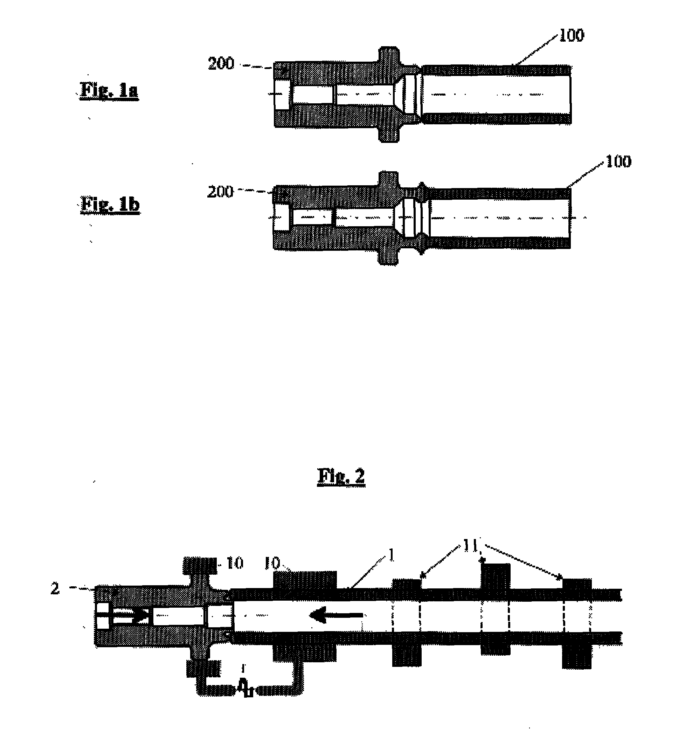

La figure 1a montre un embout cylindrique d'entraînement 200 connu et destiné à être assemblé sur un tube d'arbre à cames 100 par soudage par résistance. L'embout 200 comporte une extrémité en forme de pointe appuyant sur une extrémité du tube d'arbre à cames 100.

La figure 1 b montre l'arbre à cames après l'opération de soudage par résistance, L'arbre à cames est constitué du tube d'arbre à cames 100 et de l'embout d'entrainement connu 200. Lors de l'opération de soudage par résistance, les extrémités de l'embout d'entraînement 200 et du tube d'arbre à cames 100 s'appuient l'une contre l'autre et forment un bourrelet de matière à l'extérieur et à l'intérieur de la zone de soudure. Dès le début du soudage par résistance électrique et pondant la formation du bourrelet, des projections de métal en fusion non représentées provenant de l'embout d'entraînement 200 ou du tube d'arbre à cames 100 peuvent venir se coller contre la paroi interne du tube d'arbre à cames 100 et de l'embout 200.

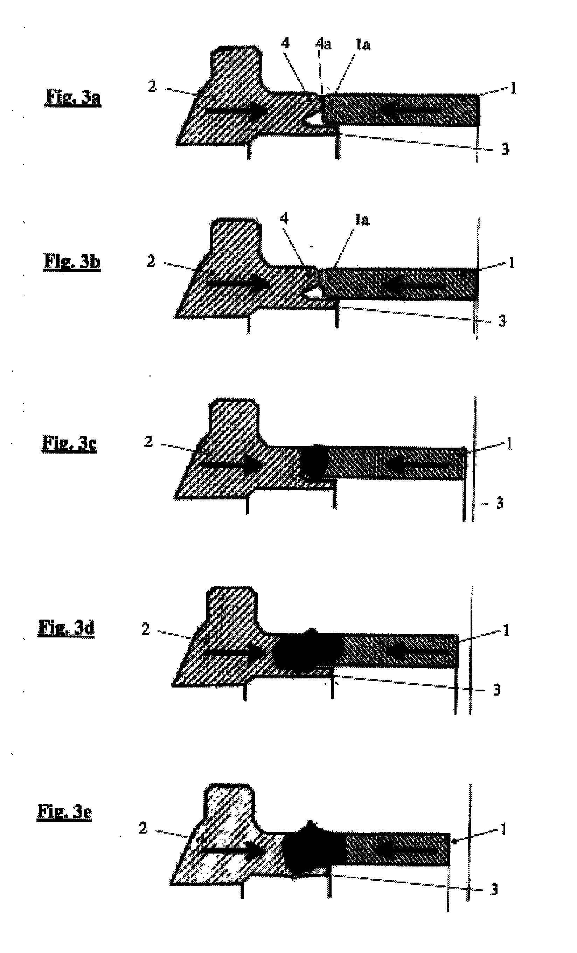

La figure 2 montre le dispositif d'assemblage par soudage par résistance d'un embout 2 selon l'invention sur un tube d'arbre à cames 1. L'arbre à cames est constitué d'un tube circulaire 1 en matériau soudable sur lequel viennent se greffer des éléments tels que des cames portant la référence 11. L'extrémité la de l'arbre à cames est prévue pour se souder contre l'extrémité 4 de l'embout 2. L'embout 2 est de forme cylindrique, de préférence de forme tubulaire. L'embout 2 pout recevoir un organe d'entraînement non représenté lui permettant de transmettre le couple moteur provenant du vilebrequin.

L'embout 2 et le tube d'arbre à cames 1 sont reliés à des électrodes 10. Les électrodes 10 permettent de faire passer du courant entre les extrémités de l'embout 2 et du tube d'arbre à cames 1 dans le but de les chauffer afin qu'elles se soudent entre elles. Ce mode de soudage est appelé soudage par résistance. Cette opération implique aussi de fournir un effort pour que les deux extrémités appuient l'une contre l'autre, ce que l'on peut appeler le forgeage de l'embout 2 sur le tube d'arbre à cames 1, L'embout 2 et le tube d'arbre à cames 1 peuvent être maintenus dans des mandrins coaxiaux non représentés qui fournissent l'effort nécessaire pour faire appuyer les extrémités de l'embout 2 et du tube d'arbre à cames 1 l'une contre l'autre,

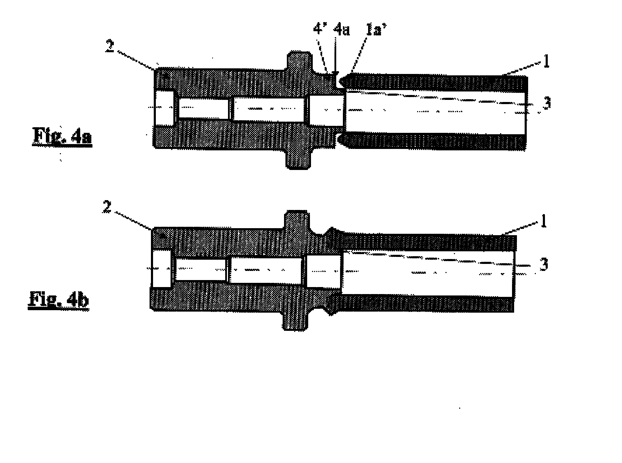

La figure 3a montre en détail la zone de l'extrémité 4 de l'embout 2 se trouvant en appui contre l'extrémité 1a du tube d'arbre à cames 1. L'extrémité 4 de l'embout 2 dont la section peut être en forme de pointe est prévue pour se souder contre l'extrémité 1a du tube d'arbre à cames 1. La pointe, appelée pointe de contact, définit une surface de contact 4a contre laquelle l'extrémité 1a du tube d'arbre à cames 1 vient en appui.

Selon l'invention, l'embout 2 comporta un déflecteur dépassant à l'intérieur du tube et sans contact avec ce dernier avant soudage. Le déflecteur dépasse à l'intérieur du tube. Il peut dépasser d'au moins 1 mm de la surface de contact 4a de l'embout 2 sur le tube d'ambre à cames 1. Ce déflecteur peut être une partie tubulaire 3. La partie tubulaire 3 est une partie d'extrémité de l'embout 2. Elle a un diamètre extérieur inférieur au diamètre intérieur du tube d'arbre à cames 1, et elle se situe sous l'extrémité 4 en pointe de l'embout 2, de sorte que l'extrémité 4 l'entoure.

Selon une variante représentée par les figures 4a et 4b, l'extrémité 1a' du tube d'arbre à cames 1 comporte un pointe de contact, alors que l'extrémité 4' de l'embout 2 est de forme plate, c'est-à-dire qu'elle ne comporte plus de pointe de contact comme celle représentée sous la référence 4 à la figure 2a. Cette variante diminue le coût d'usinage de l'embout 2, et elle ne fait que modifier les paramètres d'usinage du chanfrein qui est pratiqué sur l'extrémité du tube d'arbre à cames 1.

Pour réaliser l'assemblage de l'embout 2 sur le tube d'arbre à cames 1, on commence par les aligner de sorte que leurs axes de révolution soient coaxiaux, Ensuite, on référence à la figure 3a, on vient mettre l'extrémité 4 de l'embout 2 en contact avec l'extrémité 1a du tube d'arbre à cames 1. L'extrémité en forme de pointe, se trouvant soit sur l'extrémité 4 de l'embout 2 soit sur l'extrémité 1a du tube d'arbre à cames 1, crée une zone de résistance de contact électrique élevée au contact du tube d'arbre à cames 1 et de l'embout 2 afin que l'énergie développée soit dissipée principalement dans cette zone, et favorise un chauffage localisé à la liaison des composants (1, 2), c'est-à-dire au niveau de la surface de contact 4a illustrée par la figure 3b.

La partie d'extrémité de l'embout 2, représentée sous la forme de la partie tubulaire 3 de l'embout 2, est rentrée dans le tube d'arbre à cames 1, L'intérieur du tube d'arbre à cames 1 est ainsi protégé contre les projections de métal en fusion. La partie tubulaire 3 n'est pas on contact avec la surface intérieure du tube d'arbre à cames 1. Il peut exister un jeu entre la surface extérieure de la partie tubulaire 3 et la surface intérieure du tube d'arbre à cames 1, le but étant de faire passer le courant lors du soudage par les extrémités de l'embout 2 et du tube d'arbre à cames 1.

En référence à la figure 3c, on applique un effort sur les extrémités pour les souder l'une contre l'autre. C'est l'étape de forgeage tout en conservant le chauffage par résistance. Il se forme un bourrelet inférieur et un bourrelet extérieur dans la zone du contact des deux extrémités. Des perles de soudures peuvent provenir du bourrelet inférieur. Elles sont alors arrêtées par la partie tubulaire 3 de l'embout 2 qui fait obstacle à leur détachement du bourrelet inférieur.

Les figures 3d et 3e montrent la suite du forgeage et du chauffage. Les deux extrémités se soudent l'une contre l'autre. La formation du bourrelet intérieur est aussi stoppée par la partie tubulaire 3 de l'embout 2.

Dans une variante possible du procédé d'assemblée par soudage par résistance, la partie d'extrémité de l'embout 2 peut être emboîtée légèrement serrée, ou peut être emboitée avec un jeu nul, dans le tube d'arbre à cames 1. Cet emboîtement légèrement serré ne portera pas préjudice au soudage par résistance. En effet, contre toute attente, des essais ont montré que le courant passe de préférence dans la zone de contact sous pression, c'est à dire des zones en contact par l'opération dite de forgeage, et que le contact entre la partie tubulaire 3 représentant la partie d'extrémité de l'embout et l'intérieur du tube d'arbre à cames 1 ne génère que quelques courants de fuite qui ne perturbent que très peu l'opération de soudage. On obtient en plus un centrage de l'embout 2 dans le tube d'arbre à cames 1.

Un des avantages de la présente invention est que l'on n'a plus de formation de perles de soudures à l'intérieur du tube d'arbre à cames 1, ce qui fiabilise le fonctionnement du moteur, et ce qui évite d'avoir à nettoyer l'intérieur du tube d'arbre à cames 1 après l'opération de soudage par résistance.

Un autre avantage de la présente invention est qu'au cours de l'opération de soudage, la partie tubulaire 3 de l'embout 2 assure le maintien du positionnent de l'embout 2 dans le tube d'arbre à cames 1 dès que le bourrelet inférieur se forme et entre en contact avec la partie tubulaire 3.

## Revendications

1. Embout (2) cylindrique d'entraînement d'arbres à cames fixé par soudage par résistance à l'extrémité d'un arbre à cames tubulaire par sa surface de contact avec celui-ci, **caractérisé en ce que** l'embout (2) compose un déflecteur dépassant à l'intérieur du tube et sans contact avec ce dernier avant soudage.

2. Embout (2) selon la revendication 1, **caractérisé en ce que** le déflecteur dépasse à l'intérieur du tube d'au moins 2 mm de la surface de contact de l'embout sur le tube d'arbres à cames.

3. Embout (2) selon la revendication 1 ou 2, **caractérisé en ce que** le déflecteur est constitué d'une partie tubulaire (3) située au niveau de l'extrémité de l'embout (2) en contact avec le tube d'arbre à cames.

4. Embout (2) selon la revendication 3, **caractérisé en ce que** l'extrémité (4) de l'embout (2) en contact avec le tube d'arbre à cames entoure la partie tubulaire.

5. Embout (2) selon la revendication 3 ou 4, **caractérisé en ce que** le diamètre extérieur de la partie tubulaire (3) est inférieur au diamètre intérieur du tube d'arbre à cames (1).

6. Arbre à cames tubulaire de moteur à combustion interne comportant un tube d'arbre à cames (1) et comportant un embout (2) cylindrique d'entraînement fixé par soudage par résistance à l'extrémité (1a) du tube d'arbre à cames (1), **caractérise en ce que** l'extrémité (1a) du tube d'arbre à cames (1) comporte une pointe de contact et que l'embout (2) comporte un déflecteur de protection de l'intérieur de l'arbre à cames contre les projections de métal en fusion.

7. Arbre à cames tubulaire de moteur à combustion interne comportant un tube d'acre à cames (1) et comportant un embout (2) cylindrique d'entraînement fixé par soudage par résistance à l'extrémité (1a) du tube d'arbre à cames (1), **caractérisé en ce que** l'extrémité (1a) de l'embout (2) comporte une pointe de contact et que l'embout (2) comporte un déflecteur de protection de l'intérieur de l'arbre à cames contre les projections de métal en fusion.

8. Arbre à cames selon la revendication 6 ou 7, **caractérisé en ce que** le déflecteur est constitué d'une partie tubulaire (3) située au niveau de l'extrémité de l'embout (2).

9. Procédé d'assemblage par soudage par résistance d'un embout (2) cylindrique d'entraînement à l'extrémité (1a) d'un arbre à cames tubulaire, **caractérisé en ce que** l'intérieur du tube d'arbre à cames (1) est protégé contre les projections de métal en fusion par une partie d'extrémité de l'embout (2).

10. Procédé d'assemblage par soudage par résistance selon la revendication 9, **caractérisé en ce que** la partie d'extrémité de l'embout (2) est constituée d'un déflecteur dépassant à l'intérieur du tube d'arbre à cames (1).

11. Procédé d'assemblage par soudage par résistance selon la revendication 9 ou 10, **caractérisé en ce que** la partie d'extrémité de l'embout (2) est emboitée légèrement serré dans le tube d'arbre à cames (1).
